# EUROPEAN PATENT SPECIFICATION

(11) **EP 3 414 534 B1**
(45) Date of publication and mention of the grant of the patent: **22.07.2020**
(21) Application number: 18745482.2
(22) Date of filing: 29.01.2018
(51) Int. Cl.: G01G 1/18, G09B 1/00, G01G 21/14, G01G 1/20, A47G 33/00

(54) **REDEMPTIVE WORK OF JESUS CHRIST DEMONSTRATED BALANCE SCALE**
BALKENWAAGE MIT ANZEIGE DES ERLÖSUNGSWERKS VON JESUS CHRISTUS
OUVRE RÉDEMPTRICE DE JÉSUS CHRIST DÉMONTRÉE SUR UNE BALANCE

(30) Priority: 01.02.2017 US 201715421485
(43) Date of publication of application: 19.12.2018
(73) Proprietor: Hammond, Jr. John Francis, Broken Arrow, OK 74014 (US)
(72) Inventor: Hammond, Jr. John Francis, Broken Arrow, OK 74014 (US)
(74) Representative: Zanoli, Enrico
(86) International application number: PCT/US2018/015794
(87) International publication number: WO 2018/144398

(56) References cited:
- CN-U- 201 681 505
- GB-A- 650 205
- GB-A- 650 205
- US-A- 3 000 114
- US-A- 4 871 314
- US-A1- 2017 013 989
- US-A1- 2017 140 675
- US-B2- 6 974 327
- US-S- D 158 744
- Anonymous: "Vintage Brass and Mahogany Balance Scales - Kitchenalia - Hemswell Antique Centres", , 31 December 1999 (1999-12-31), XP055629696, Retrieved from the Internet: URL:https://www.hemswell-antiques.com/anti ques/kitchenalia/vintage-brass-and-mahogan y-balance-scales-66336.html [retrieved on 2019-10-08]

## Description

### BACKGROUND OF THE INVENTION

### 1. Field of the Invention

The present invention is a balance scale that is designed to depict and teach the significance of the death, burial and resurrection of Jesus Christ and how the sacrifice of Jesus is available to save mankind from their sins. Scales are known from US650205A and CN201681505U.

### 2. Description of the Related Art

From a Christian perspective, Jesus Christ of Nazareth died on a cross to pay the penalty for the sins of mankind. For those who choose to believe, Jesus freed mankind from the bondage of sin. As it is written in the Gospel of John, Jesus said "It is finished" just before He died. Another form of this saying is "Paid in full!"

This invention demonstrates the redemptive work of Jesus Christ on a balance scale, showing that mankind's sin has been paid in full by Jesus' ransom sacrifice. Put another way, God's remedy for mankind's sin problem was the death of His own Son. God has accepted His Son's death as payment for everyone's sin, but if we refuse to accept Jesus' death by faith, then the penalty of our sins remains upon us and our sin debt is still counted against us, as demonstrated on the scale.

The self-righteousness of mankind is considered to be the equivalent of filthy rags in the eyes of our God, as it is written in the Book of Isaiah. Furthermore, it is written in the Book of Romans, "There is none righteous, no, not one." Therefore, from a Christian perspective, we attain righteousness by having faith in the completed work of Jesus Christ. Through faith in Jesus Christ, the sin debt that was charged against us has been paid in full, and on a balance scale demonstration, the debt that was originally owed has been off-set by the payment made through the atoning death of Christ. Put another way, we have a debt that we cannot pay and Jesus paid a debt that He didn't owe. This is demonstrated in a visual perspective on a balance scale.

### SUMMARY OF THE INVENTION

This invention involves a loaded balance scale, where one side of the scale represents mankind in their sinful or natural state, and the other side of the scale represents the sacrificial work of Jesus Christ. Both sides of the scale have trays to hold articles that represent mankind and represent Christ, where the articles are of equal or approximately equal weight. The trays are supported on a balance arm, and the balance arm rotates on a pivot.

At or near the center of the balance arm is a pointer that rotates to a label plate, and the label plate has descriptions listed thereon. Alternatively, the label plate can be at or near the center of the balance arm and rotate to a pointer, and the label plate has descriptions listed thereon. The weight on the trays will determine which description the pointer will point to.

Even in our natural state, mankind has a sin problem that has been passed down from our first ancestors Adam and Eve. Therefore, this invention can be used as a Christian teaching aid showing the benefit of choosing to accept the death of Christ as payment in full for our sins, along with showing the consequence of our refusal to accept the death of Christ as payment for our sins.

### BRIEF DESCRIPTION OF THE DRAWINGS

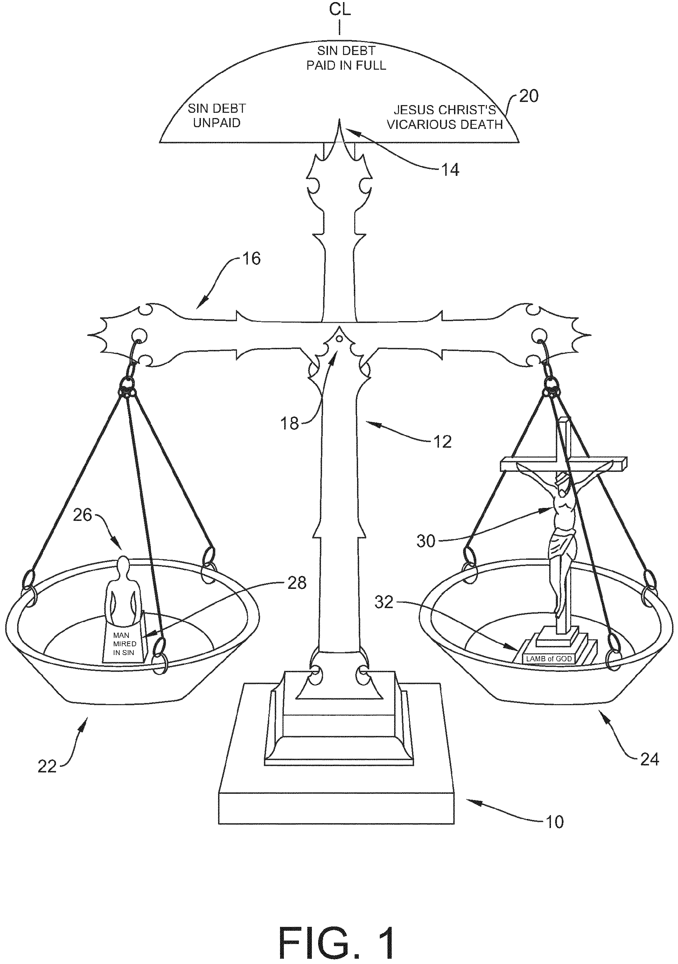

FIGURE 1 is a frontal view of the balance scale with an article on each tray, where trays are in equilibrium, and the pointer is connected to the balance arm and pointing to a description on the label plate.
FIGURE 2 is a frontal view of an alternate balance scale 100 shown with the trays of the scale in equilibrium.
FIGURE 3 is the alternate balance scale 100 of Figure 2 shown with the sacrifice of Jesus alone.
FIGURE 4 is the alternate balance scale 100 of Figures 2 and 3 shown with the sins of man unredeemed by the sacrifice of Jesus.
FIGURE 5 is an enlarged view of the pointer and movable scale sign of Figure 3 showing their relative movement with reference to the center line of the alternate balance scale.
FIGURE 6 is an enlarged view of the pointer and movable scale sign of Figure 4 showing their relative movement with reference to the center line of the alternate balance scale.
FIGURE 7 is a frontal view of an alternate balance scale 200 shown with the trays of the scale in equilibrium.
FIGURE 8 is the alternate balance scale 200 of Figure 7 shown with the sacrifice of Jesus alone.
FIGURE 9 is the alternate balance scale 200 of Figures 7 and 8 shown with the sins of man unredeemed by the sacrifice of Jesus.

### DETAILED DESCRIPTION OF THE PREFERRED EMBODIMENT

In the drawing, the base 10 supports the balance arm support 12, and the balance arm support holds the balance arm 16 which rotates on a pivot 18. At or near the center of the balance arm 16 is a pointer 14 that rotates to a label plate 20. The pointer may have a counter-balance on the opposite end to bring equally weighted trays to an even level. The label plate 20 has descriptions posted thereon which are listed in Table I.

Hanging one end of the balance arm 16 is a tray 24 that holds an article of Christ's redemption 30. A label 32 may be at or near the base of the article of Christ's redemption 30, and has descriptions which are listed in Table II.

Hanging on the other end of the balance arm 16 is a tray 22 that holds an article of mankind 26. A label 28 may be at or near the base of the article of mankind 26, and has descriptions which are listed in Table III.

The base 10, balance arm support 12, balance arm pivot 18, balance arm 16, trays 22 and 24, and pointer 14 are made from but not limited to metal, plastic, wood, hardboard, cardboard, composites, ceramic, glass, rubber, or any combination thereof.

The label plate 20 is made from but not limited to metal, plastic, wood, hardboard, cardboard, composites, ceramic, glass, rubber, or any combination thereof.

The article of Christ's redemption 30 is made from but not limited to metal, plastic, wood, hardboard, cardboard, composites, ceramic, glass, rubber, or any combination thereof.

The article of mankind 26 is made from but not limited to metal, plastic, wood, hardboard, cardboard, composites, ceramic, glass, rubber, or any combination thereof.

**TABLE I**

| A. Article of Christ's Redemption on one tray and Article of Mankind on other tray. Description options can be but not limited to: |
|---|
| 1. SIN DEBT PAID IN FULL |
| 2. MANKIND BOUGHT AT A PRICE |
| 3. MANKIND BOUGHT BY CHRIST |

| B. Article of Mankind on one tray and Article of Christ's Redemption removed from other tray. Description options can be but not limited to: |
|---|
| 1. SIN DEBT UNPAID |
| 2. SIN DEBT STILL OWED |
| 3. SIN DEBT CHARGED AGAINST MANKIND |

| C. Article of Christ's Redemption on one tray and Article of Mankind removed from other tray. Description options can be but not limited to: |
|---|
| 1. JESUS CHRIST'S VICARIOUS DEATH |
| 2. JESUS CHRIST'S ATONING DEATH |
| 3. JESUS CHRIST'S RANSOM SACRIFICE |

**TABLE II**

| A. Description options can be but not limited to: |
|---|
| 1. LAMB OF GOD |
| 2. SON OF GOD |
| 3. BREAD OF LIFE |
| 4. SAVIOR OF THE WORLD |
| 5. LIGHT OF THE WORLD |
| 6. ROCK OF SALVATION |
| 7. THE WAY, THE TRUTH AND THE LIFE |

**TABLE III**

| A. Description options can be but not limited to: |
|---|
| 1. MAN MIRED IN SIN |
| 2. MAN BONDAGED TO SIN |
| 3. MAN BURDENED WITH SIN |
| 4. MAN'S SIN DEBT |
| 5. MAN'S SINFUL STATE |
| 6. MAN'S NATURAL STATE |

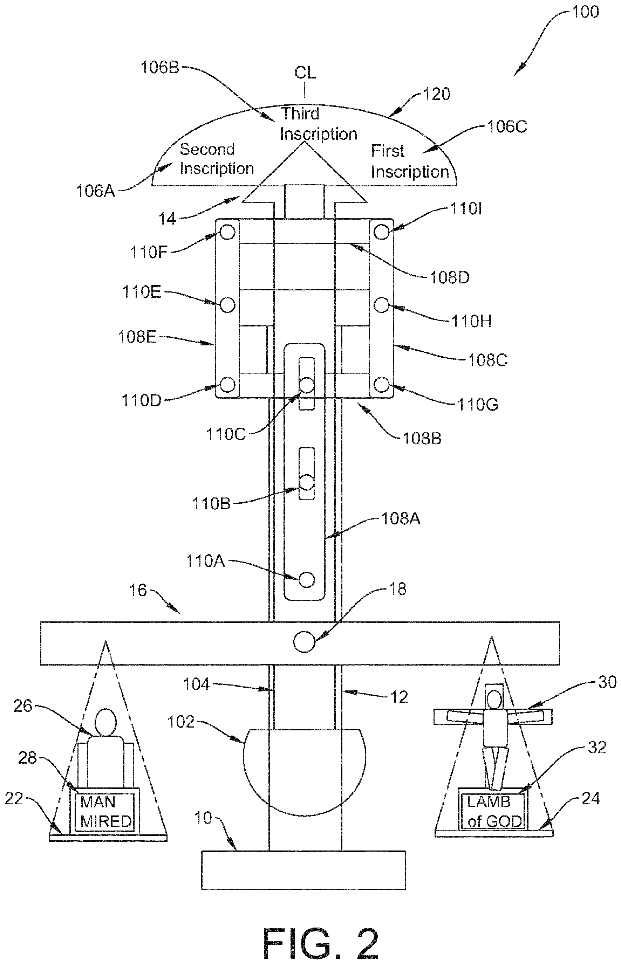

Referring now to Figures 2-6, there is illustrated an alternate balance scale 100 that is constructed in accordance with an alternate preferred embodiment. The alternate balance scale 100 includes a counter-balance 102 that is located at a lower end 104 of the pointer 14. The counter-balance 102 serves to help bring equally weighted trays 22 and 24 to an even level so that both the movable pointer 14 and the movable label plate 120 are aligned with the center line (as indicated by the letters CL in the drawings) of the alternate balance scale 100. This is depicted in Figure 2 where the article of mankind 26 and the article of Christ's redemption 30 are of equal weight and are resting on trays 22 and 24, respectively.

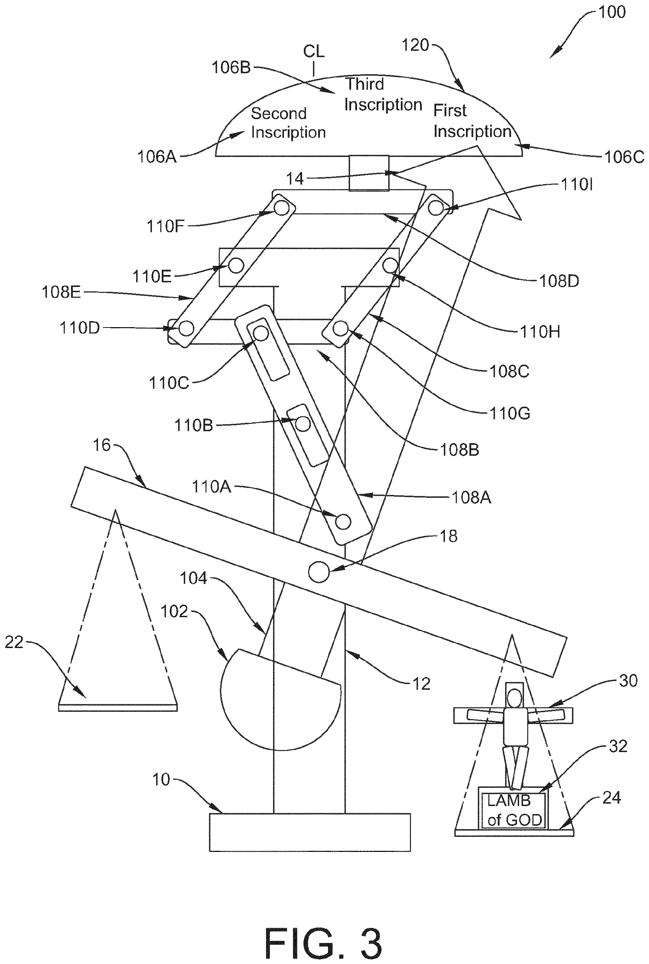

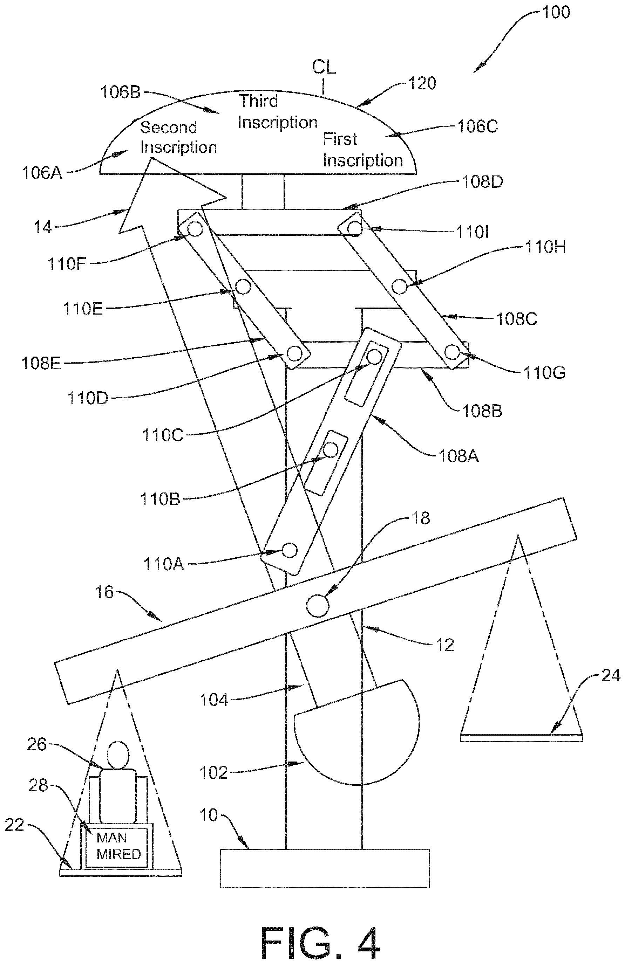

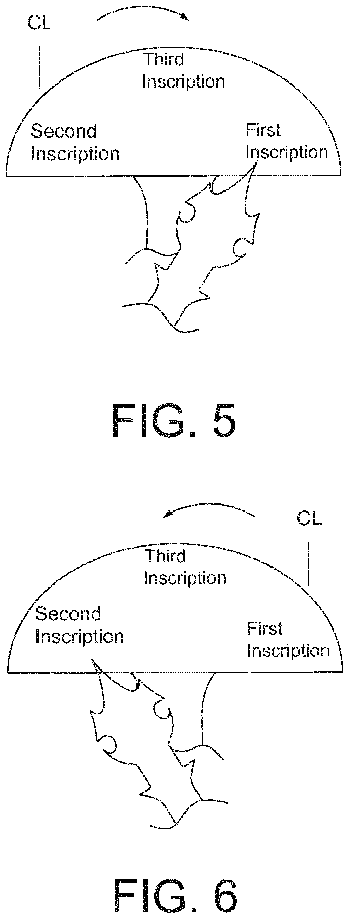

Referring now to Figures 3 and 4, when only one of the articles 26 or 30 is resting on its respective tray 22 or 24, the alternate balance 100 is not in equilibrium and the pointer 14 and movable label plate 120 both move in the direction of the tray 22 or 24 on which the article 26 or 30 is resting. The movement of both the pointer 14 and the movable label plate 120 relative to the center line CL of the alternate balance scale 100 is illustrated in Figures 5 and 6. Although both the pointer 14 and the movable label plate 120 move in the same direction, their movement is not equal, but is proportional to each other, with the pointer 14 moving further than the movement of the movable lable plate 120.

Movement of both the pointer 14 and the movable label plate 120 allows for alternate sizes of labels 106 on the movable label plate 120, provides flexibility if the movable label plate 120 is bumped, aides in visual centering of the pointer 14, and aids in the entertainment feature of the alternate balance scale 100.

In order for the movable label plate 120 to move in conjunction with the pointer 14 in this fashion, linkage of several pivoting arms 108 that are pivotally secured via pivot points 110 to the pointer 14 and to the vertical balance arm support 12 cooperate to cause movement of the movable label plate 120 in response to movement of the pointer 14, as illustrated in the drawings and particularly in Figures 3 and 4.

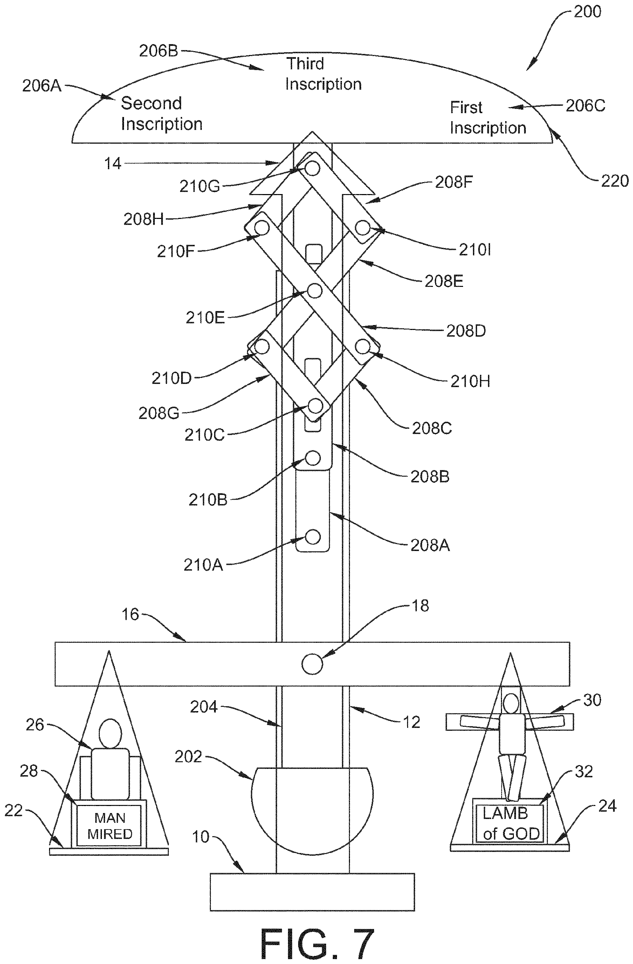

Referring now to Figures 7-9, there is illustrated an alternate balance scale 200 that is constructed in accordance with an alternate preferred embodiment. The alternate balance scale 200 includes a counter-balance 202 that is located at a lower end 204 of the pointer 14. The counter-balance 202 serves to help bring equally weighted trays 22 and 24 to an even level so that both the movable pointer 14 and the movable label plate 220 are aligned with the center of the alternate balance scale 200. This is depicted in Figure 7 where the article of mankind 26 and the article of Christ's redemption 30 are of equal weight and are resting on trays 22 and 24, respectively.

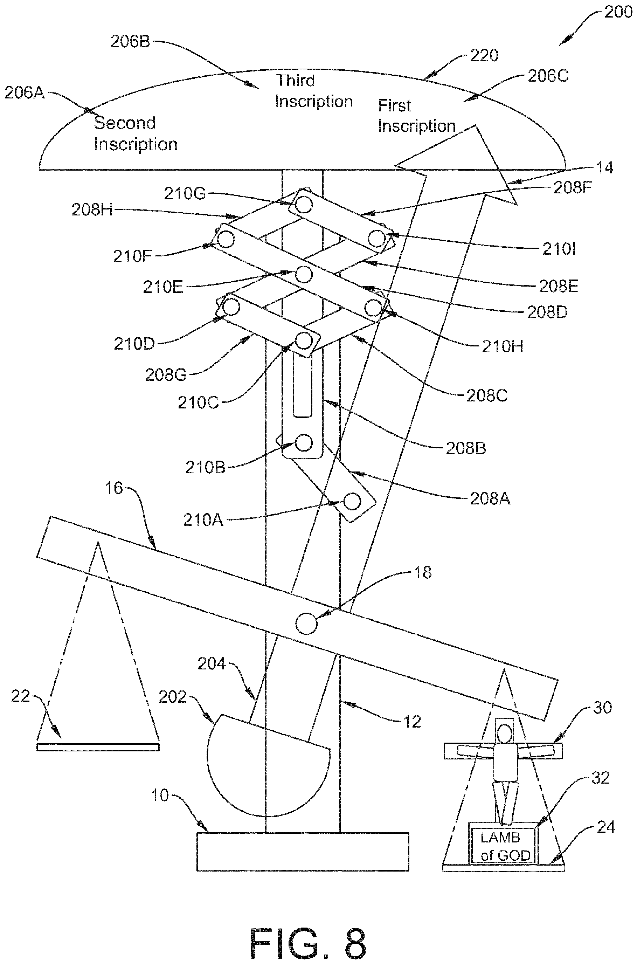

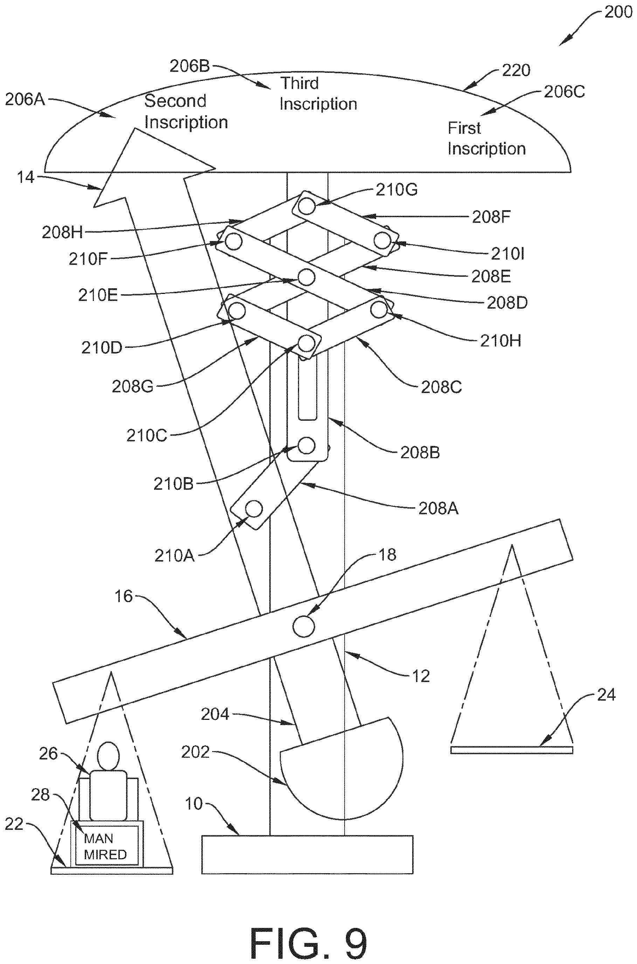

Referring now to Figures 8 and 9, when only one of the articles 26 or 30 is resting on its respective tray 22 or 24, the alternate balance 200 is not in equilibrium and the pointer 14 moves in the direction of the tray 22 or 24 on which the article 26 or 30 is resting, and the movable label plate 220 moves down. The movement of both the pointer 14 and the movable label plate 220 of the alternate balance scale 200 is illustrated in Figures 8 and 9.

Movement of both the pointer 14 and the movable label plate 220 allows for alternate sizes of labels 206 on the movable label plate 220, provides flexibility if the movable label plate 220 is bumped, aides in visual centering of the pointer 14, and aids in the entertainment feature of the alternate balance scale 200.

In order for the movable label plate 220 to move in conjunction with the pointer 14 in this fashion, linkage of several pivoting arms 208 that are pivotally secured via pivot points 210 to the pointer 14 and to the vertical balance arm support 12 cooperate to cause movement of the movable label plate 220 in response to movement of the pointer 14, as illustrated in the drawings and particularly in Figures 8 and 9.

It is understood that the invention is not limited to the embodiments set forth herein for the purposes of exemplification, but is to be limited only by the scope of the attached claims.

## Claims

1. A visually demonstrative device for sharing the good news of Jesus Christ's redemptive power comprising:
a base, a support post secured centrally to the base and extending upward vertically from the base, a balance beam pivotally secured to the support post at a fulcrum point, said balance beam extending horizontally on either side of the support post, each end of the balance beam supporting a holding tray for holding removable objects,
said balance beam being provided centrally with a pointer that extends perpendicular to the balance beam and points upward toward a moveable scale sign provided on the top end of the support post, said moveable scale sign moving in conjunction with movement of said pointer, said pointer pivoting in conjunction with pivoting motion of the balance beam, said pointer having a counter-balance on an opposite end past the pivotally secured fulcrum point,
a first object being a statue of Jesus Christ hanging on a cross with the function of providing a visual representation of the price paid for mankind's redemption, and supported by a base for the cross bearing a first inscription, said statue of Jesus Christ removably placed on a first tray of the two holding trays,
a second object being a statue of a human embedded in or near a block or pile of rags representing sin with the function of providing visual representation of mankind unable to redeem themselves from sin and having a sign bearing a second inscription, said statue of a human removably placed on a second tray of the two holding trays,
said scale sign bearing three inscriptions, a first inscription of the three inscriptions on the scale sign being located on the same side of the scale sign as the holding tray bearing the statue of Jesus Christ,
a second inscription of the three inscriptions on the scale sign being located on the same side of the scale sign as the holding tray bearing the statue of a human where it is understood that if the first object and the first inscription are on the right side of the balance scale, then the second object and the second inscription are on the left side of the balance scale, and likewise, if the first object and the first inscription are on the left side of the balance scale, then the second object and the second inscription are on the right side of the balance scale,
a third inscription of the three inscriptions on the scale sign being located centrally on the scale sign, and
the statue of Jesus Christ and the statue of the human having enough weight to serve as a mechanical function to rotate the balance beam, but being of approximately equal weight so that the balance beam is approximately level and the pointer points to the third inscription when the statue of Jesus Christ and the statue of the human are placed on their respective holding trays and so that the pointer points to the first inscription when the statue of a human is removed and points to the second inscription when the statue of Jesus Christ is removed.

2. A visually demonstrative device for sharing the good news of Jesus Christ's redemptive power according to Claim 1 wherein the first inscription which appears in association with the statue of Jesus Christ is selected from the following inscriptions:
"Jesus", "Christ", "Jesus Christ", "Lamb of God", "Son of God", "Bread of Life", "Savior of the World", "Light of the World", "Rock of Salvation", "The Way, The Truth and the Life", and any other descriptive term or phrase for the person of Jesus Christ.

3. A visually demonstrative device for sharing the good news of Jesus Christ's redemptive power according to Claim 2 wherein the second inscription which appears in association with the statue of the human is selected from the following inscriptions:
"Man Mired in Sin", "Man's Bondage to Sin", "Man Burdened with Sin", "Man's Sin Debt", "Man's Sinful State", "Man's Natural State", and any other descriptive term or phrase for a human that has never accepted Jesus Christ as their savior and has not been saved by his redemptive blood shed on the cross.

4. A visually demonstrative device for sharing the good news of Jesus Christ's redemptive power according to Claim 3 wherein the first of three inscriptions which appears on the scale sign is selected from the following list:
"Jesus Christ's Vicarious Death", "Jesus Christ's Atoning Death", "Jesus Christ's Ransom Sacrifice", and any other descriptive term or phrase for the death, burial and resurrection of Jesus Christ which serves as an atoning sacrifice that is sufficient to pay the price for and redeem humans from their sins and give them eternal life if they will accept Jesus Christ as their Savior.

5. A visually demonstrative device for sharing the good news of Jesus Christ's redemptive power according to Claim 4 wherein the second of three inscriptions which appears on the scale sign is selected from the following list:
"Sin Debt Unpaid", "Sin Debt Still Owed", "Sin Debt Charged Against Mankind", or any other descriptive term or phrase for the lost and condemned state of a human who is sinful by nature and deserves death and who has not accepted the free salvation and eternal life available through trusting in Jesus Christ as their personal Savior.

6. A visually demonstrative device for sharing the good news of Jesus Christ's redemptive power according to Claim 5 wherein the third of three inscriptions which appears on the scale sign is selected from the following list:
"Sin Debt Paid in Full", "Mankind Bought at a Price", "Mankind Bought by Christ", and any other term or phrase that describes the fact that a human is saved from the punishment of their sins and is given eternal life by the price that Jesus Christ paid on the cross with his death, burial and resurrection if they will accept him as their Lord and Savior.

7. A visually demonstrative device for sharing the good news of Jesus Christ's redemptive power according to Claim 1 wherein the second inscription which appears in association with the statue of the human is selected from the following inscriptions:
"Man Mired in Sin", "Man's Bondage to Sin", "Man Burdened with Sin", "Man's Sin Debt", "Man's Sinful State", "Man's Natural State", and any other descriptive term or phrase for a human that has never accepted Jesus Christ as their savior and has not been saved by his redemptive blood shed on the cross.

8. A visually demonstrative device for sharing the good news of Jesus Christ's redemptive power according to Claim 1 wherein the first of three inscriptions which appears on the scale sign is selected from the following list:
"Jesus Christ's Vicarious Death", "Jesus Christ's Atoning Death", "Jesus Christ's Ransom Sacrifice", and any other descriptive term or phrase for the death, burial and resurrection of Jesus Christ which serves as an atoning sacrifice that is sufficient to pay the price for and redeemed humans from their sins and give them eternal life if they will accept Jesus Christ as their Savior.

9. A visually demonstrative device for sharing the good news of Jesus Christ's redemptive power according to Claim 1 wherein the second of three inscriptions which appears on the scale sign is selected from the following list:
"Sin Debt Unpaid", "Sin Debt Still Owed", "Sin Debt Charged Against Mankind", or any other descriptive term or phrase for the lost and condemned state of a human who is sinful by nature and deserves death and who has not accepted the free salvation and eternal life available through trusting in Jesus Christ as their personal Savior.

10. A visually demonstrative device for sharing the good news of Jesus Christ's redemptive power according to Claim 1 wherein the third of three inscriptions which appears on the scale sign is selected from the following list:
"Sin Debt Paid in Full", "Mankind Bought at a Price", "Mankind Bought by Christ", and any other term or phrase that describes the fact that a human is saved from the punishment of their sins and is given eternal life by the price that Jesus Christ paid on the cross with his death, burial and resurrection if they will accept him as their Lord and Savior.

11. A visually demonstrative device for sharing the goods news of Jesus Christ's redemptive power according to Claim 1, wherein the movable scale sign moves either side-to-side via a parallel-type linkage means or up-and-down via a scissor-type linkage means.

## Patentansprüche

1. Visuell eindrucksvolle Vorrichtung zum Teilen der frohen Botschaft von der erlösenden Kraft Jesu Christi, aufweisend:
einen Sockel, einen Tragepfosten, der mittig an dem Sockel befestigt ist und vertikal von dem Sockel nach oben verläuft, einen Schwebebalken, der an einem Drehpunkt schwenkbar an dem Tragepfosten befestigt ist, wobei der Schwebebalken auf jeder Seite des Tragepfostens horizontal verläuft und jedes Ende des Schwebebalkens eine Halteschale zum Halten entfernbarer Objekte trägt,
wobei der Schwebebalken mittig mit einem Zeiger versehen ist, der rechtwinklig zu dem Schwebebalken verläuft und nach oben in Richtung eines beweglichen Skalenschilds zeigt, das an dem oberen Ende des Tragepfostens vorhanden ist, wobei sich das bewegliche Skalenschild in Übereinstimmung mit der Bewegung des Zeigers bewegt, wobei der Zeiger in Übereinstimmung mit einer Schwenkbewegung des Schwebebalkens schwenkt, wobei der Zeiger ein Gegengewicht auf einem gegenüberliegenden Ende hinter dem schwenkbar befestigten Drehpunkt aufweist,
wobei ein erstes Objekt eine Statue des an einem Kreuz hängenden Jesus Christus ist, die dazu dient, eine visuelle Darstellung des für die Erlösung der Menschheit bezahlten Preises zu bieten, und die durch einen Sockel für das Kreuz, das eine erste Inschrift trägt, getragen wird, wobei die Statue von Jesus Christus entfernbar in der ersten Schale der zwei Halteschalen platziert ist,
wobei ein zweites Objekt eine Statue eines Menschen ist, der in Lumpen gehüllt ist bzw. sich in oder nahe an einem Haufen Lumpen befindet, die die Sünde darstellen, die dazu dient, eine visuelle Darstellung der Menschheit, die unfähig ist, sich selbst von der Sünde zu erlösen, zu bieten, und die ein Schild aufweist, das eine zweite Inschrift trägt, wobei die Statue des Menschen entfernbar in der zweiten Schale der zwei Halteschalten platziert ist,
wobei das Skalenschild drei Inschriften trägt, wobei sich eine erste Inschrift der drei Inschriften auf dem Skalenschild auf derselben Seite des Skalenschilds befindet wie die Halteschale, die die Statue von Jesus Christus trägt,
wobei sich eine zweite Inschrift der drei Inschriften auf dem Skalenschild auf derselben Seite des Skalenschilds befindet wie die Halteschale, die die Statue eines Menschen trägt, wobei davon ausgegangen wird, dass, wenn sich das erste Objekt und die erste Inschrift auf der rechten Seite der Balkenwaage befinden, sich das zweite Objekt und die zweite Inschrift auf der linken Seite der Balkenwaage befinden, und dass sich ebenso, falls sich das erste Objekt und die erste Inschrift auf der linken Seite der Balkenwaage befinden, das zweite Objekt und die zweite Inschrift auf der rechten Seite der Balkenwaage befinden,
wobei sich eine dritte Inschrift der drei Inschriften auf dem Skalenschild mittig auf dem Skalenschild befindet, und
wobei die Statue von Jesus Christus und die Statue des Menschen genug Gewicht aufweisen, um eine mechanische Funktion zum Drehen des Schwebebalkens zu erfüllen, doch ungefähr das gleiche Gewicht aufweisen, so dass der Schwebebalken annähernd waagrecht ist und der Zeiger auf die dritte Inschrift zeigt, wenn die Statue von Jesus Christus und die Statue des Menschen in ihren jeweiligen Halteschalen platziert sind, und so dass der Zeiger auf die erste Inschrift zeigt, wenn die Statue des Menschen entfernt wird und auf die zweite Inschrift zeigt, wenn die Statue von Jesus Christus entfernt wird.

2. Visuell eindrucksvolle Vorrichtung zum Teilen der frohen Botschaft von der erlösenden Kraft Jesu Christi nach Anspruch 1, wobei die erste Inschrift, die zusammen mit der Statue von Jesus Christus erscheint, aus den folgenden Inschriften ausgewählt ist:
"Jesus", "Christus", "Jesus Christus", "Lamm Gottes", "Sohn Gottes", "Brot des Lebens", "Erlöser der Welt", "Licht der Welt", "Fels der Erlösung", "Der Weg, die Wahrheit und das Leben", und jedem anderen Begriff oder Satz, der die Person Jesu Christi beschreibt.

3. Visuell eindrucksvolle Vorrichtung zum Teilen der frohen Botschaft von der erlösenden Kraft Jesu Christi nach Anspruch 2, wobei die zweite Inschrift, die zusammen mit der Statue des Menschen erscheint, aus den folgenden Inschriften ausgewählt ist:
"In Sünde verstrickter Mensch", "Durch Sünde geknechteter Mensch", "Mit Sünde beladener Mensch", "Des Menschen Schuld der Sünde", "Der sündhafte Zustand des Menschen", "Der natürliche Zustand des Menschen", und jedem anderen Begriff oder Satz, der einen Menschen beschreibt, der Jesus Christus nie als seinen Erlöser angenommen hat und durch sein am Kreuz vergossenes, erlösendes Blut nicht errettet wurde.

4. Visuell eindrucksvolle Vorrichtung zum Teilen der frohen Botschaft von der erlösenden Kraft Jesu Christi nach Anspruch 3, wobei die erste von drei Inschriften, die auf dem Skalenschild erscheint, aus der folgenden Liste ausgewählt ist:
"Der stellvertretende Tod Jesu Christi", "Der Sühnetod Jesu Christi", "Das Opfer Jesu Christi" und jedem anderen Begriff oder Satz, der den Tod, das Begräbnis und die Wiederauferstehung Jesu Christi als Sühneopfer beschreibt, das ausreichend ist, um den Preis für die Sünden der Menschen zu begleichen und die Menschen von ihren Sünden zu erlösen und ihnen ewiges Leben zu geben, falls sie Jesus Christus als ihren Erlöser annehmen.

5. Visuell eindrucksvolle Vorrichtung zum Teilen der frohen Botschaft von der erlösenden Kraft Jesu Christi nach Anspruch 4, wobei die zweite von drei Inschriften, die auf dem Skalenschild erscheint, aus der folgenden Liste ausgewählt ist:
"Schuld der Sünde unbeglichen", "Schuld der Sünde steht noch aus", "Von der Menschheit geschuldete Schuld der Sünde" oder jedem anderen Begriff oder Satz, der den verlorenen und verdammten Zustand eines Menschen beschreibt, der von Natur aus sündhaft ist und den Tod verdient, und der die freie Erlösung und das ewige Leben nicht angenommen hat, das jedem offensteht, der Jesus Christus als seinem persönlichen Erlöser vertraut.

6. Visuell eindrucksvolle Vorrichtung zum Teilen der frohen Botschaft von der erlösenden Kraft Jesu Christi nach Anspruch 5, wobei die dritte von drei Inschriften, die auf dem Skalenschild erscheint, aus der folgenden Liste ausgewählt ist:
"Schuld der Sünde vollständig beglichen", "Für einen Preis freigekaufte Menschheit", "Von Christus freigekaufte Menschheit", und jedem anderen Begriff oder Satz, der die Tatsache beschreibt, dass ein Mensch von der Bestrafung seiner Sünden errettet wird und ihm ewiges Leben zuteil wird, durch den Preis, den Jesus Christus mit seinem Tod am Kreuz, seinem Begräbnis und seiner Wiederauferstehung bezahlt hat, falls er ihn als seinen Herrn und Erlöser annimmt.

7. Visuell eindrucksvolle Vorrichtung zum Teilen der frohen Botschaft von der erlösenden Kraft Jesu Christi nach Anspruch 1, wobei die zweite Inschrift, die zusammen mit der Statue des Menschen erscheint, aus den folgenden Inschriften ausgewählt ist:
"In Sünde verstrickter Mensch", "Durch Sünde geknechteter Mensch", "Mit Sünde beladener Mensch", "Des Menschen Schuld der Sünde", "Der sündhafte Zustand des Menschen", "Der natürliche Zustand des Menschen", und jedem anderen Begriff oder Satz, der einen Menschen beschreibt, der Jesus Christus nie als seinen Erlöser angenommen hat und durch sein am Kreuz vergossenes, erlösendes Blut nicht errettet wurde.

8. Visuell eindrucksvolle Vorrichtung zum Teilen der frohen Botschaft von der erlösenden Kraft Jesu Christi nach Anspruch 1, wobei die erste von drei Inschriften, die auf dem Skalenschild erscheint, aus der folgenden Liste ausgewählt ist:
"Der stellvertretende Tod Jesu Christi", "Der Sühnetod Jesu Christi", "Das Opfer Jesu Christi" und jedem anderen Begriff oder Satz, der den Tod, das Begräbnis und die Wiederauferstehung Jesu Christi als Sühneopfer beschreibt, das ausreichend ist, um den Preis für die Sünden der Menschen zu begleichen und die Menschen von ihren Sünden zu erlösen und ihnen ewiges Leben zu geben, falls sie Jesus Christus als ihren Erlöser annehmen.

9. Visuell eindrucksvolle Vorrichtung zum Teilen der frohen Botschaft von der erlösenden Kraft Jesu Christi nach Anspruch 1, wobei die zweite von drei Inschriften, die auf dem Skalenschild erscheint, aus der folgenden Liste ausgewählt ist:
"Schuld der Sünde unbeglichen", "Schuld der Sünde steht noch aus", "Von der Menschheit geschuldete Schuld der Sünde" oder jedem anderen Begriff oder Satz, der den verlorenen und verdammten Zustand eines Menschen beschreibt, der von Natur aus sündhaft ist und den Tod verdient, und der die freie Erlösung und das ewige Leben nicht angenommen hat, das jedem offensteht, der Jesus Christus als seinem persönlichen Erlöser vertraut.

10. Visuell eindrucksvolle Vorrichtung zum Teilen der frohen Botschaft von der erlösenden Kraft Jesu Christi nach Anspruch 1, wobei die dritte von drei Inschriften, die auf dem Skalenschild erscheint, aus der folgenden Liste ausgewählt ist:
"Schuld der Sünde vollständig beglichen", "Für einen Preis freigekaufte Menschheit", "Von Christus freigekaufte Menschheit", und jedem anderen Begriff oder Satz, der die Tatsache beschreibt, dass ein Mensch von der Bestrafung seiner Sünden errettet wird und ihm ewiges Leben zuteil wird, durch den Preis, den Jesus Christus mit seinem Tod am Kreuz, seinem Begräbnis und seiner Wiederauferstehung bezahlt hat, falls er ihn als seinen Herrn und Erlöser annimmt.

11. Visuell eindrucksvolle Vorrichtung zum Teilen der frohen Botschaft von der erlösenden Kraft Jesu Christi nach Anspruch 1, wobei sich das bewegliche Skalenschild entweder über eine parallelartige Gestängeeinrichtung von Seite zu Seite bewegt oder über eine scherenartige Gestängeeinrichtung nach oben und unten bewegt.

## Revendications

1. Dispositif de démonstration visuelle pour partager la bonne nouvelle de la puissance rédemptrice de Jésus-Christ comprenant :
une base, un montant de support fixé de manière centrale à la base et s'étendant vers le haut verticalement à partir de la base, un fléau de balance fixé de manière pivotante au montant de support au niveau d'un point pivot, ledit fléau de balance s'étendant horizontalement d'un côté ou de l'autre du montant de support, chaque extrémité du fléau de balance supportant un plateau de réception pour recevoir des objets amovibles,
ledit fléau de balance étant doté de manière centrale d'une aiguille qui s'étend perpendiculairement au fléau de balance et pointe vers le haut vers un signe d'échelle mobile fourni à l'extrémité supérieure du montant de support, ledit signe d'échelle mobile se déplaçant conjointement avec le mouvement de ladite aiguille, ladite aiguille pivotant conjointement avec le mouvement pivotant du fléau de balance, ladite aiguille ayant un contrepoids sur une extrémité opposée au-delà du point pivot fixé de manière pivotante,
un premier objet étant une statue de Jésus-Christ crucifié ayant la fonction de fournir une représentation visuelle du prix payé pour la rédemption de l'humanité, et supporté par une base pour la croix portant une première inscription, ladite statue de Jésus-Christ placée de manière amovible sur un premier plateau des deux plateaux de réception,
un second objet étant une statue d'un être humain incorporé dans ou près d'un bloc ou d'une pile de chiffons représentant le péché ayant la fonction de fournir une représentation visuelle de l'humanité incapable de racheter ses péchés et ayant un signe portant une deuxième inscription, ladite statue d'un être humain placée de manière amovible sur un second plateau des deux plateaux de réception,
ledit signe d'échelle portant trois inscriptions, une première inscription des trois inscriptions sur le signe d'échelle étant située du même côté du signe d'échelle que le plateau de réception portant la statue de Jésus-Christ,
une deuxième inscription des trois inscriptions sur le signe d'échelle étant située du même côté du signe d'échelle que le plateau de réception portant la statue d'un être humain où il est entendu que si le premier objet et la première inscription sont sur le côté droit de la balance, alors le second objet et la deuxième inscription sont sur le côté gauche de la balance, et de même, si le premier objet et la première inscription sont sur le côté gauche de la balance, alors le second objet et la deuxième inscription sont sur le côté droit de la balance,
une troisième inscription des trois inscriptions sur le signe d'échelle étant située de manière centrale sur le signe d'échelle, et
la statue de Jésus-Christ et la statue de l'être humain ayant un poids suffisant pour servir de fonction mécanique pour entraîner la rotation du fléau de balance, mais ayant un poids approximativement égal de sorte que le fléau de balance soit approximativement de niveau et que l'aiguille pointe vers la troisième inscription lorsque la statue de Jésus-Christ et la statue de l'être humain sont placées sur leurs plateaux de réception respectifs et de sorte que l'aiguille pointe vers la première inscription lorsque la statue d'un être humain est retirée et pointe vers la deuxième inscription lorsque la statue de Jésus-Christ est retirée.

2. Dispositif de démonstration visuelle pour partager la bonne nouvelle de la puissance rédemptrice de Jésus-Christ selon la revendication 1 dans lequel la première inscription qui apparaît en association avec la statue de Jésus-Christ est choisie parmi les inscriptions suivantes :
« Jésus », « Christ », « Jésus-Christ », « Agneau de Dieu », « Fils de Dieu », « Pain de Vie », « Sauveur du Monde », « Lumière du Monde », « Rocher du Salut », « Le Chemin, la Vérité et la Vie », et tout autre terme ou expression descriptif pour la personne de Jésus-Christ.

3. Dispositif de démonstration visuelle pour partager la bonne nouvelle de la puissance rédemptrice de Jésus-Christ selon la revendication 2 dans lequel la deuxième inscription qui apparaît en association avec la statue de l'être humain est choisie parmi les inscriptions suivantes :
« Homme en proie au péché », « Homme esclave du péché », « Homme enseveli dans le péché », « Dette des péchés de l'homme », « État pécheur de l'homme », « État naturel de l'homme », et tout autre terme ou expression descriptif pour un être humain qui n'a jamais accepté Jésus-Christ comme son sauveur et n'a pas été sauvé par son sang rédempteur versé sur la croix.

4. Dispositif de démonstration visuelle pour partager la bonne nouvelle de la puissance rédemptrice de Jésus-Christ selon la revendication 3 dans lequel la première des trois inscriptions qui apparaît sur le signe d'échelle est choisie dans la liste suivante :
« Mort de Jésus-Christ pour les autres », « Mort expiatoire de Jésus-Christ », « Sacrifice de Jésus-Christ comme rançon », et tout autre terme ou expression descriptif pour la mort, l'ensevelissement et la résurrection de Jésus-Christ qui sert de sacrifice expiatoire qui est suffisant pour payer le prix des péchés et racheter les êtres humains et leur offrir une vie éternelle s'ils acceptent Jésus-Christ comme leur Sauveur.

5. Dispositif de démonstration visuelle pour partager la bonne nouvelle de la puissance rédemptrice de Jésus-Christ selon la revendication 4 dans lequel la deuxième des trois inscriptions qui apparaît sur le signe d'échelle est choisie dans la liste suivante :
« Dette des péchés non remboursée », « Dette des péchés restant due », « Dette des péchés à la charge de l'humanité », ou tout autre terme ou expression descriptif pour l'état perdu ou condamné d'un être humain qui est pécheur par nature et mérite la mort et qui n'a pas accepté le libre salut et la vie éternelle obtenus par la foi en Jésus-Christ comme son Sauveur personnel.

6. Dispositif de démonstration visuelle pour partager la bonne nouvelle de la puissance rédemptrice de Jésus-Christ selon la revendication 5 dans lequel la troisième des trois inscriptions qui apparaît sur le signe d'échelle est choisie dans la liste suivante :
« Dette des péchés payée dans son intégralité », « Humanité rachetée à un prix », « Humanité rachetée par le Christ », et tout autre terme ou expression qui décrit le fait qu'un être humain est sauvé de la punition de ses péchés et reçoit la vie éternelle grâce au prix que Jésus-Christ a payé sur la croix par sa mort, son ensevelissement et sa résurrection s'il l'accepte comme son Seigneur et Sauveur.

7. Dispositif de démonstration visuelle pour partager la bonne nouvelle de la puissance rédemptrice de Jésus-Christ selon la revendication 1 dans lequel la deuxième inscription qui apparaît en association avec la statue de l'être humain est choisie parmi les inscriptions suivantes :
« Homme en proie au péché », « Homme esclave du péché », « Homme enseveli dans le péché », « Dette des péchés de l'homme », « État pécheur de l'homme », « État naturel de l'homme », et tout autre terme ou expression descriptif pour un être humain qui n'a jamais accepté Jésus-Christ comme son sauveur et n'a pas été sauvé par son sang rédempteur versé sur la croix.

8. Dispositif de démonstration visuelle pour partager la bonne nouvelle de la puissance rédemptrice de Jésus-Christ selon la revendication 1 dans lequel la première des trois inscriptions qui apparaît sur le signe d'échelle est choisie dans la liste suivante :
« Mort de Jésus-Christ pour les autres », « Mort expiatoire de Jésus-Christ », « Sacrifice de Jésus-Christ comme rançon », et tout autre terme ou expression descriptif pour la mort, l'ensevelissement et la résurrection de Jésus-Christ qui sert de sacrifice expiatoire qui est suffisant pour payer le prix des péchés et racheter les êtres humains et leur offrir une vie éternelle s'ils acceptent Jésus-Christ comme leur Sauveur.

9. Dispositif de démonstration visuelle pour partager la bonne nouvelle de la puissance rédemptrice de Jésus-Christ selon la revendication 1 dans lequel la deuxième des trois inscriptions qui apparaît sur le signe d'échelle est choisie dans la liste suivante :
« Dette des péchés non remboursée », « Dette des péchés restant due », « Dette des péchés à la charge de l'humanité », ou tout autre terme ou expression descriptif pour l'état perdu ou condamné d'un être humain qui est pécheur par nature et mérite la mort et qui n'a pas accepté le libre salut et la vie éternelle obtenus par la foi en Jésus-Christ comme son Sauveur personnel.

10. Dispositif de démonstration visuelle pour partager la bonne nouvelle de la puissance rédemptrice de Jésus-Christ selon la revendication 1 dans lequel la troisième des trois inscriptions qui apparaît sur le signe d'échelle est choisie dans la liste suivante :
« Dette des péchés payée dans son intégralité », « Humanité rachetée à un prix », « Humanité rachetée par le Christ », et tout autre terme ou expression qui décrit le fait qu'un être humain est sauvé de la punition de ses péchés et reçoit la vie éternelle grâce au prix que Jésus-Christ a payé sur la croix par sa mort, son ensevelissement et sa résurrection s'il l'accepte comme son Seigneur et Sauveur.

11. Dispositif de démonstration visuelle pour partager la bonne nouvelle de la puissance rédemptrice de Jésus-Christ selon la revendication 1, dans lequel le signe d'échelle mobile se déplace soit d'un côté et de l'autre par l'intermédiaire d'un moyen de liaison de type parallèle soit de haut en bas par l'intermédiaire d'un moyen de liaison de type ciseaux.
